# EUROPEAN PATENT APPLICATION

(11) **EP 3 026 949 A1**
(43) Date of publication of application: **01.06.2016**
(21) Application number: 13890177.2
(22) Date of filing: 25.07.2013
(51) Int. Cl.: H04W 24/00

(54) **INFORMATION PROCESSING METHOD AND DEVICE THEREOF AND COMMUNICATION SYSTEM**

(71) Applicant: FUJITSU LIMITED, Kawasaki-shi Kanagawa 211-8588 (JP)
(72) Inventor: WANG, Weiwei, Beijing 100025 (CN); LI, Zhaojun, Beijing 100025 (CN)
(74) Representative: Wilding, Frances Ward
(86) International application number: PCT/CN2013/080123
(87) International publication number: WO 2015/010301

(57) **Abstract**

A method and apparatus for information processing and a communication system. The method includes: storing, when user equipment detects that a failure occurs, information related to the failure, and reserving the stored information related to the failure. In this way, when the network side obtains the information related to failure at each time occurrence of failure, the handover parameter may be configured according to the information, thereby reducing occurrence of failure.

## Description

### Technical Field

The present disclosure relates to the field of communications, and in particular to a method and an apparatus for information processing and a communication system.

### Background

In a long-term evolution advanced (LTE-A) network of Rel. 11, incorrect handover parameter setting will result in occurrence of failure in user equipment in inter radio access technology (inter-RAT) handover, including a radio link failure (RLF), or a handover failure (HOF), hence leading to occurrence of errors, such as too late handover or too early handover.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

In an existing mechanism, in order to overcome the occurrence of the above failure, the user equipment will store information related to the failure and report the information to the network side. In detecting a new RLF or an HOF, the information on the RLF or the HOF stored in the terminal side will be covered by the newly-detected information on RLF or HOF, thereby resulting in that the network side is unable to obtain information on RLF or HOF experienced by the user equipment each time.

Embodiments of the present disclosure provide a method and apparatus for information processing and a communication system; wherein UE may store information related to a failure in each time of occurrence of the failure, thereby making the network side configure a handover parameter according to the information so as to reduce occurrence of a failure.

According to a first aspect of the embodiments of the present disclosure, there is provided a method for information processing, including:
storing, when user equipment detects that a failure occurs, information related to the failure, and reserving the stored information related to the failure.

According to a second aspect of the embodiments of the present disclosure, there is provided a method for information processing, including:
receiving indication information indicating that user equipment has stored information related to a failure reported by the user equipment; wherein the indication information is used to indicate that the user equipment stores information related to failure of more than one times of failures, or indicate the number of pieces of the information related to the failure stored by the user equipment and that the number is greater than 1, or indicate that the user equipment stores relevance information on inter-RAT handover; or
receiving information related to failure of more than one times of failures reported by the user equipment at one time; or
receiving information related to failure of one time or a predetermined number times of failures reported by the user equipment, and first indication information or second indication information indicating that the user equipment further stores unreported information related to the failure.

According to a third aspect of the embodiments of the present disclosure, there is provided an apparatus for information processing, including:
a first information processing unit configured to, when user equipment detects that a failure occurs, store information related to the failure and reserve the stored information related to the failure.

According to a fourth aspect of the embodiments of the present disclosure, there is provided an apparatus for information processing, including:
an information receiving unit configured to receive indication information indicating that user equipment has stored information related to a failure reported by the user equipment; wherein the indication information is used to indicate that the user equipment stores information related to failure of more than one times of failures, or indicate the number of pieces of the information related to the failure stored by the user equipment and that the number is greater than 1, or indicate that the user equipment stores relevance information on inter-RAT handover; or
to receive information related to failure of more than one times of failures reported by the user equipment at one time; or
to receive information related to failure of one time or a predetermined number times of failures reported by the user equipment, and first indication information or second indication information indicating that the user equipment further stores unreported information related to the failure.

According to a fifth aspect of the embodiments of the present disclosure, there is provided user equipment, including the apparatus as described in Embodiment 3 of the present disclosure.

According to a sixth aspect of the embodiments of the present disclosure, there is provided a base station, including the apparatus as described in Embodiment 4 of the present disclosure.

According to a seventh aspect of the embodiments of the present disclosure, there is provided a network system, including a base station; wherein the system further includes user equipment configured to store information on a failure and reserve the stored information on the failure when the user equipment defects that the failure occurs.

According to an eighth aspect of the embodiments of the present disclosure, there is provided a computer-readable program, wherein when the program is executed in an apparatus for information processing or user equipment, the program enables a computer to carry out the method for information processing as described in Embodiment 1 of the present disclosure in the apparatus for information processing or the user equipment.

According to a ninth aspect of the embodiments of the present disclosure, there is provided a storage medium in which a computer-readable program is stored, wherein the computer-readable program enables a computer to carry out the method for information processing as described in Embodiment 1 of the present disclosure in an apparatus for information processing or user equipment.

According to a tenth aspect of the embodiments of the present disclosure, there is provided a computer-readable program, wherein when the program is executed in an apparatus for information processing or a base station, the program enables a computer to carry out the method for information processing as described in Embodiment 2 of the present disclosure in the apparatus for information processing or the base station.

According to an eleventh aspect of the embodiments of the present disclosure, there is provided a storage medium in which a computer-readable program is stored, wherein the computer-readable program enables a computer to carry out the method for information processing as described in Embodiment 2 of the present disclosure in an apparatus for information processing or a base station.

An advantage of the embodiments of the present disclosure exists in that UE may store information related to a failure in each time of occurrence of the failure, and when the information is notified to the network side, the network side may configure a handover parameter according to the obtained information related to the failure in each time of occurrence of the failure, thereby reducing occurrence of a failure.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of the present disclosure only, and a person of ordinary skill in the art may further obtain other drawings according to these accompanying drawings without making an inventive effort. In the drawings:
Figure 1 is a schematic diagram of a scenario where UE experiences a failure;
Figure 2 is a flowchart of the method for information processing of Embodiment 3 of the present disclosure;
Figure 3 is a flowchart of the method for information processing of Embodiment 4 of the present disclosure;
Figure 4 is a flowchart of the method for information processing of Embodiment 5 of the present disclosure;
Figure 5 is a schematic diagram of a structure of the apparatus for information processing of Embodiment 6 of the present disclosure;
Figure 6 is a schematic diagram of a structure of the apparatus for information processing of Embodiment 7 of the present disclosure;
Figure 7 is a schematic diagram of a structure of the UE of an embodiment of the present disclosure; and
Figure 8 is a schematic diagram of a structure of the base station of an embodiment of the present disclosure.

### Detailed Description

Various embodiments of the present disclosure shall be described below with reference to the accompanying drawings. These embodiments are illustrative only, and are not intended to limit the present disclosure.

### Embodiment 1

Embodiment 1 of the present disclosure provides a method for information processing, including: storing, when user equipment detects that a failure occurs, information related to the failure, and reserving the stored information related to the failure.

Hence, the UE may store the information related to a failure of each failure, and when more than one times of failures occur in the UE, the UE may respectively store the information related to the failures to which the more than one times of the failures correspond, so that a network side configures a handover parameter according to the information in obtaining the information related to the failure, thereby reducing occurrence of a failure.

In this embodiment, the above failure may include a radio link failure (RLF), or a handover failure (HOF), and the information related to the failure (RLF or HOF) may include information in VarRLF-Report (see TS36.331 v11.3.0), such as information on measurement results of a serving cell and a neighboring cell when the failure (such as RLF or HOF) occurs, an identifier used by a terminal, and a cause of occurrence of the RLF, etc, which shall not be enumerated herein.

In this embodiment, the failure is related to inter radio access technology (inter-RAT) handover. That is, the information related to the failure (RLF or HOF) may contain relevance information on the inter-RAT handover, such as information on a universal terrestrial radio access (UTRA) cell where the user equipment is present before the occurrence of the failure, i.e. previousUTRA-CellId-r11 (see TS36.331 v11.3.0), and/or information on a UTRA cell where the user equipment is present in being reconnected to a network, i.e. selectedUTRA-CellId-r11 (see TS36.331 v11.3.0). In such a case, the UE will store the information and reserve stored relevance information on the failure (RLF or HOF) related to the inter-RAT handover.

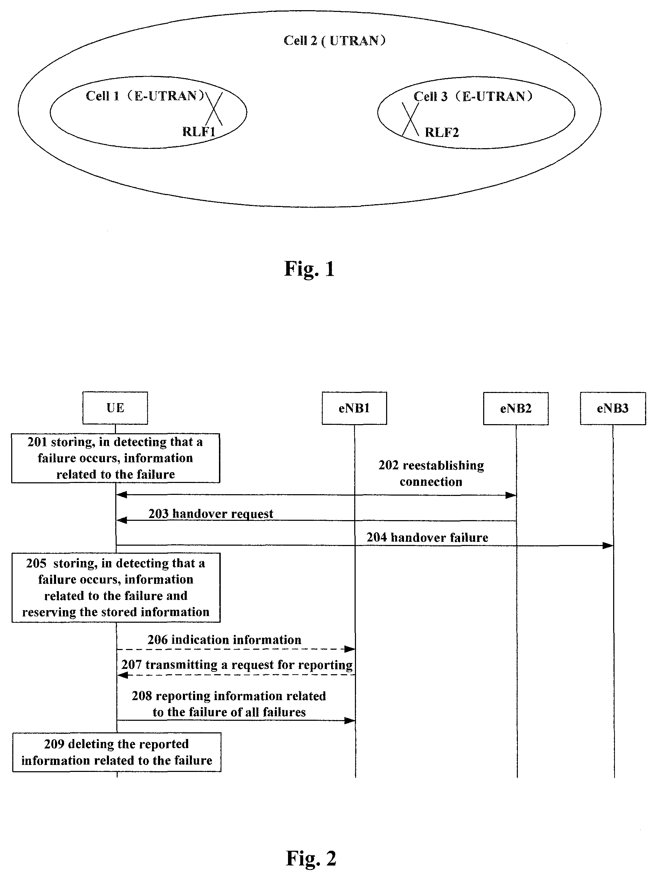

Fig. 1 is a schematic diagram of a scenario where the UE experiences the failure. And following description is given taking the scenario shown in Fig. 1 as an example.

As shown in Fig. 1, cell 1 and cell 3 are evolved universal terrestrial radio access (E-UTRA) networks (LTE networks), and cell 2 is a UTRAN network (a 3G network), cell 1 and cell 3 are in different radio access networks from cell 2.

A failure occurs when the UE is handed over from cell 1 to cell 2; that is, a radio link failure (RLF1) occurs in the handover process, or the failure (RLF1) occurs in cell 1 before the handover, such as too late or too early inter-RAT handover. At this moment, after the UE is reconnected to cell 2, a failure occurs when the UE is handed over from cell 2 to cell 3, such as a radio link failure (RLF2) occurs in the handover process, or the failure (RLF2) occurs in a relatively short time after the UE is handed over to cell 3. In an existing mechanism, the UE replaces the original information related to RLF1 with the information related to RLF2, so that a network side is unable to obtain the information of each time of failure. However, in the embodiment of the present disclosure, the information related to RLF2 is stored and the information related to RLF1 is reserved. In this way, when the network side obtains information related to failure in each time of occurrence of failure, it may configure a handover parameter according to the information, thereby reducing occurrence of a failure.

In this embodiment, when the failure occurs, the UE stores the information related to the failure only when it determines that the stored information related to the failure contains the information related to the inter-RAT handover, and/or determines that the information related to the failure to be currently stored contains the information related to the inter-RAT handover. In this way, storage spaces may be saved.

In this embodiment, when the UE is reconnected to the network, it may transmit indication information indicating that the user equipment has stored the information related to the failure to the network side. Hence, the network side may learn that the user equipment has stored the information related to the failure, thereby triggering the network side to request the UE for reporting the information related to the failure.

For example, the indication information indicates that the user equipment has stored the information related to the failure of one time of failure, or indicates that the user equipment has stored information related to the failure of more than one times of failures; or,
indicates the number of pieces of the information related to the failure stored by the user equipment and indicates that the number is greater than 1, the number being identical to the number of times of failures; or,
indicates that the user equipment has stored the relevance information on the inter-RAT handover.

In this embodiment, when the UE is reconnected to the network, such as being reconnected to any one of cells 1-3, or is reconnected to another cell that is not shown, the UE may further report the information related to the failure to the network side, so that the network side configures a handover parameter according to the reported information. In this embodiment, the cell to which the UE is reconnected may be an LTE network (such as an E-UTRAN), and may also be another network, such as a 3G network (such as a UTRAN).

In this embodiment, any manner may be used for reporting the information, which shall be explained below by way of examples.
1) Manner 1
   reporting all stored information related to the failure at one time, i.e. information related to failures to which all failures correspond;
2) Manner 2
   reporting the information related to the failure piece by piece, i.e. reporting the information related to the failure of one time of failure each time, and in each time of reporting the information related to the failure, if there still exists unreported information related to the failure, reporting first indication information indicating the user equipment further stores unreported information to the network side; and
3) Manner 3
   reporting the information related to the failure by the UE according to a predetermined number, i.e. reporting the information related to the failure of the predetermined number of failure each time; wherein, when the predetermined number of pieces of the information related to the failure is reported, if there still exists unreported information related to the failure, reporting second indication information indicating that the user equipment further stores unreported information related to the failure to the network side.

In this embodiment, after the first indication information or the second indication information is transmitted to the network side by the UE, the UE may transmit the unreported information related to the failure according to a request fed back by the network side according to the first indication information or the second indication information.

As to the unreported information related to the failure, it may be transmitted in any manner, such as being transmitted in any one of the above manners 1-3, which shall not be described herein any further.

In this embodiment, the UE may delete the reported information related to the failure, so as to save storage spaces.

It can be seen from the above embodiment that as the UE stores the information related to failure of each time of failure, after the UE reports the information to the network side, the network side is made to perform parameter configuration according to the information reported by the UE, thereby reducing occurrence of a failure.

### Embodiment 2

The embodiment of the present disclosure provides a method for information processing, including:
receiving indication information indicating that user equipment has stored information related to a failure reported by the user equipment; wherein the indication information is used to indicate that the user equipment stores information related to failure of one time of failure, or the user equipment stores information related to failure of more than one times of failures, or indicate the number of pieces of the information related to the failure stored by the user equipment and that the number is greater than 1, the number being identical to the number of times of failures, or indicate that the user equipment stores relevance information on inter-RAT handover; and/or
receiving information related to the failure of more than one times of failures reported by the user equipment at one time, or receiving information related to the failure of one time or a predetermined number times of failures reported by the user equipment, and first indication information or second indication information indicating that the user equipment further stores unreported information related to the failure.

It can be seen from the above embodiment that a network side may obtain the relevance information of each time of occurrence of failure of the UE, so that the network side performs parameter configuration according to the relevance information, thereby reducing occurrence of a failure.

Furthermore, in this embodiment, after receiving the first indication information or the second indication information, the network side transmits a request to the UE indicating the UE to report the unreported information related to failure, and may also receive the information related to failure fed back by the UE according to the request.

In this embodiment, the information related to failure is as described in Embodiment 1, and shall not be described herein any further.

The method for information processing of the embodiment of the present disclosure shall be described below taking the scenario shown in Fig. 1 as an example.

### Embodiment 3

Fig. 2 is a flowchart of the method for information processing of Embodiment 3 of the present disclosure. As shown in Fig. 2, the method includes:
step 201: storing by UE in detecting that a failure occurs in inter-RAT handover, information related to the failure;
   in this embodiment, for example, the failure occurs when the UE is handed over from cell 1 to cell 2, as shown in Fig. 1, cell 1 and cell 2 adopt different radio access technologies, and the failure occurs when the UE is handed over between networks of the different radio access technologies; wherein a cause of the failure may be resulted from an RLF in cell 1 before the handover, or an HOF occurring during the handover of the UE from cell 1 to cell 2, which is similar to the relevant art, and shall not be described herein any further;
   the information related to the failure is as described in Embodiment 1, which includes information in a VarRLF-Report, and/or relevance information on inter-RAT handover, and shall not be described herein any further;
step 202: reconnecting the UE to the network;
   for example, the UE is reconnected to cell 2, and establishes connection with a base station (an eNB2);
step 203: receiving by the UE a handover request transmitted by the network side;
   wherein, the UE receives the handover request transmitted by an eNB of cell 2, such as eNB2; the request indicates the UE to be handed over from cell 2 to cell 3; wherein cell 3 uses a radio access technology different from that of cell 2;
step 204: not completing handover within a predefined time after the UE receives the handover request, resulting in a handover failure, or occurrence of an RLF immediately after completion of the handover;
step 205: storing information related to the failure of this time by the UE when the UE detects that the failure occurs, and reserving stored information related to the failure;
   in the scenario shown in Fig. 1, failure occurs twice, and the UE may store information related to the failures of these two times, and so on; and if failure occurs multiple times, and UE may store information related to the failures of these multiple times, which shall not be described herein any further;
step 206: transmitting indication information to the network side when the UE is reconnected to the network;
   wherein, it establishes connection with cell 1, and the UE may transmit the indication information to eNB1, the indication information being used to indicate that the UE has stored the information related to the failure;
   for example, the indication information may indicate that the UE has stored the information related to the failure of one time of failure, or indicate that the user equipment has stored information related to the failure of more than one times of failures, or indicate the number of pieces of the information related to the failure stored by the user equipment and the number is greater than or equal to 1;
   in the transmission of the number of pieces of the information related to the failure, each piece of information related to the failure corresponds to one time of failure, that is, the number corresponds to the number of times of failures;
   in this embodiment, the UE may transmit the indication information to the network side via an existing radio resource control (RRC) message, such as an RRCConnectionReconfigurationComplete message, an RRCConnectionReestablishmentComplete message, and an RRCConnectionSetupComplete message (refer to TS36.331 v11.3.0); however, it is not limited to the above messages, and the indication information may also be transmitted via any other existing or newly-established messages;
   furthermore, the UE may further be reconnected to cell 2 or cell 3, or reconnected to another cell not shown in the figure, and transmit the indication information to a base station (eNB) of the other cell; and the other cell may be a cell of the same radio access technology as cell 1, or a cell of a radio access technology different from that of cell 1 or cell 3, which shall not be described herein any further;
step 207: transmitting by the base station (eNB1) of cell 1 to the UE after receiving the indication information, a request for reporting the information related to the failure;
step 208: reporting the stored information related to the failure to the network side by the UE after receiving the request;
   in this embodiment, in reporting the information in manner 1 of Embodiment 1, the stored information related to the failure of all the failures may be reported to the network side at one time;
step 209: deleting the stored reported information related to the failure.

In the above embodiment, steps 206 and 207 are optional, and after reestablishing connection, the UE may directly report the information related to the failure stored by it to the network side.

### Embodiment 4

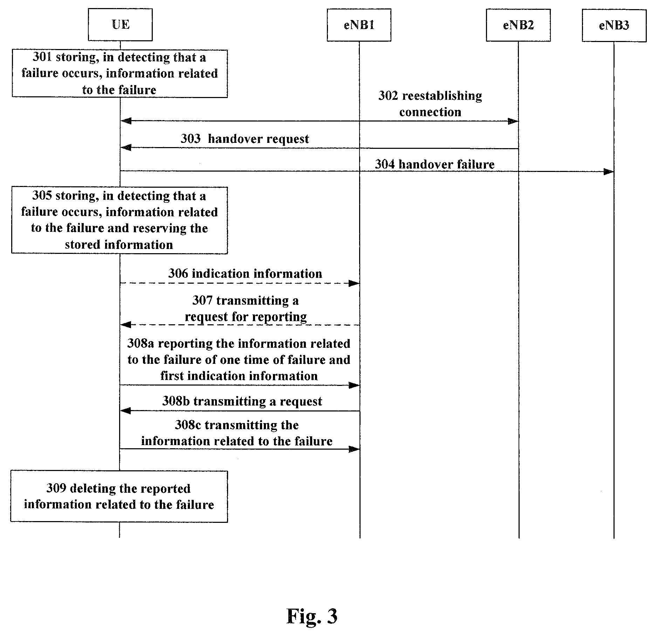

Fig. 3 is a flowchart of the method for information processing of Embodiment 4 of the present disclosure. As shown in Fig. 3, the method includes:
steps 301-307 and 309 are similar to steps 201-207 and 209 in Embodiment 3, which shall not be described herein any further.
   What is different from Embodiment 3 is that in this embodiment, the UE reports the information in manner 2 of Embodiment 1, that is, the information related to the failure is reported piece by piece, i.e. the information related to the failure of one time of failure is reported at one time, and an order of reporting is not limited, such as reporting in any order, or reporting in a temporal order, which shall not be described herein any further. Hence, in reporting the information, following steps are included:
step 308a: reporting the information related to the failure of one time of failure;
   in such a case, as there exists unreported information related to the failure in the UE, the UE further needs to report the first indication information indicating that unreported information related to the failure exists in the UE;
   the information related to the failure and the first indication information may be respectively reported to the network side, and they may be reported to the network side together; and in this embodiment, the first indication information is reported to the network side together with the information related to the failure of one time of failure;
step 308b: receiving by the network side (such as eNB1) the information related to the failure of one time of failure and the first indication information reported by the UE, and in determining that the UE is needed to report the stored unreported information related to the failure, transmitting a request message by the network side to the UE indicating the UE to report the stored unreported information related to the failure; and
step 308c: transmitting the stored unreported information related to the failure to the network side by the UE according to the request message; wherein, any manner may be use for reporting, such as reporting all the unreported information related to the failure to the network side, or reporting the unreported information related to the failure piece by piece, or reporting according to a preconfigured number, which are as described in the embodiment below, and shall not be described herein any further.

In the above embodiment, steps 306 and 307 are optional, and after reestablishing connection, the UE may directly report the information related to the failure stored by it to the network side. Furthermore, the transmission of the first indication information and step 308b may also be omitted, and the UE may transmit directly to the network side, without transmitting according to the request transmitted by the network side.

### Embodiment 5

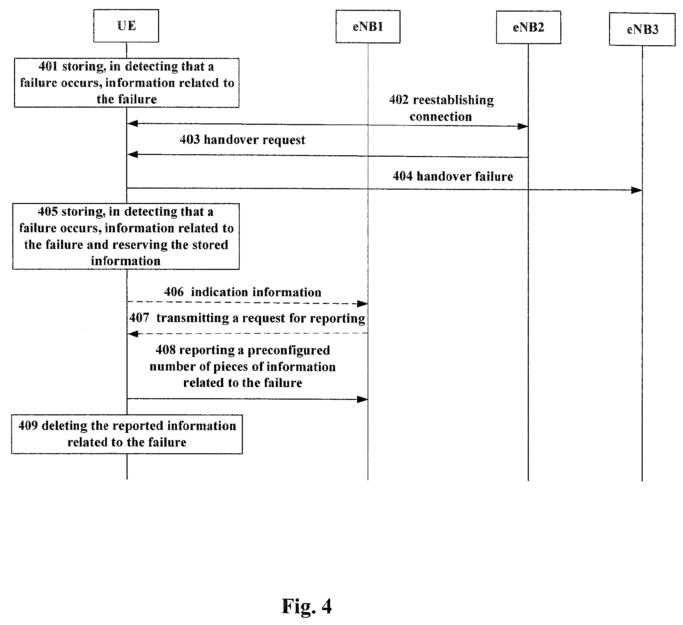

Fig. 4 is a flowchart of the method for information processing of Embodiment 5 of the present disclosure. As shown in Fig. 4, the method includes:
steps 401-407 and 409 are similar to steps 201-207 and 209 and steps 301-307 and 309 in embodiments 3 and 4, which shall not be described herein any further.

What is different from embodiments 3 and 4 is that in this embodiment, the UE reports the information in manner 3 of Embodiment 1, that is, reporting according to a preconfigured number. Hence, in reporting the information, following step is included:
step 408: reporting a preconfigured number of pieces of information related to the failure by the UE.

In such a case, the number is related to the number of times of failures, which may be configured by the network side and notified to the UE. For example, the number configured by the network side is 2, that is, information related to the failure of two times of failures is reported at one time.

In this embodiment, as the UE stores the information related to the failure of two times of failures, i.e. information on RLF1 and RLF2, the information is reported to the network side at one time according to the number 2 configured by the network side. Hence, there exists no unreported information related to the failure in the UE, and a second indication information is not needed to be transmitted to the network side.

If there exists unreported information related to the failure in the UE, the UE needs to report the second indication information indicating that unreported information related to the failure exists in the user equipment. This is similar to the case in Embodiment 4, and the above information related to the failure and the second indication information may be respectively reported to the network side, and they may also be reported to the network side together.

### Embodiment 6

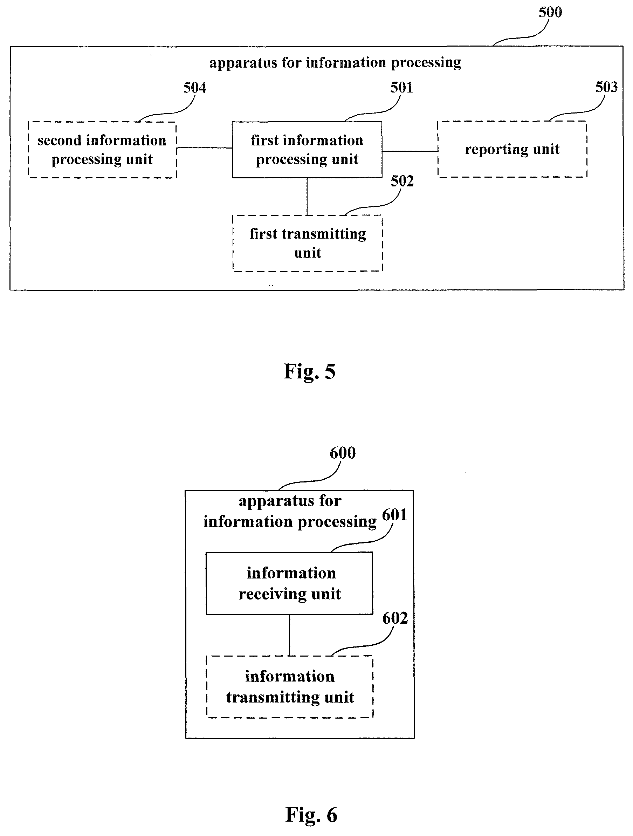

Fig. 5 is a schematic diagram of a structure of the apparatus for information processing of Embodiment 6 of the present disclosure.

As shown in Fig. 5, the apparatus 500 includes: a first information processing unit 501 configured to, when UE detects that a failure occurs, store information related to the failure and reserve the stored information related to the failure.

It can be seen from this embodiment that when the failure occurs in the UE, the information related to the failure of each time of failure may be stored. In this way, the network side may be provided with more information, and is made to perform parameter configuration according to the information, thereby reducing occurrence of failure.

In this embodiment, after being reconnected to the network, the UE may further report the above stored information and indication information indicating such a case to the network side.

As shown in Fig. 5, the apparatus 500 further includes a first transmitting unit 502 configured to transmit indication information indicating that the UE stores information related to the failure to a network side when the UE is reconnected to the network, wherein the indication information being used to indicate that the user equipment stores information related to failure of one time of failure; or indicate that the UE stores information related to the failure of more than one times of failures, or indicate the number of pieces of the information related to the failure stored by the UE and that the number is greater than 1, or indicate that the UE stores relevance information on inter-RAT handover.

In this embodiment, the above stored information may further be transmitted to the network side, so that the network side performs parameter configuration according to the information after receiving the above information, thereby reducing occurrence of failure.

As shown in Fig. 5, the apparatus 500 further includes a reporting unit 503 configured to report the information related to the failure to the network side.

In this embodiment, a manner of reporting the information related to the failure of the reporting unit 503 is as described in Embodiment 1, that is, reporting all the information related to the failure at one time; or reporting the information related to the failure piece by piece; wherein at each time of reporting the information related to the failure, if there still exists unreported information related to the failure, first indication information indicating that unreported information related to the failure still exists in the UE is reported to the network side; or reporting the information related to the failure according to a predetermined number; wherein, when the predetermined number of pieces of the information related to the failure is reported, if there still exists unreported information related to the failure, second indication information indicating that unreported information related to the failure still exists in the UE is reported to the network side.

In this embodiment, after transmitting the first indication information or the second indication information to the network side, the reporting unit 503 transmits the unreported information related to the failure according to a request of the network side; wherein, any one of the above manners may be used in reporting the unreported information related to failure, which shall not be described herein any further.

In such a case, the apparatus 500 may further include a receiving unit (not shown) configured to receive a request transmitted by the network side for reporting the information related to failure, and then the reporting unit 503 reports the unreported information related to the failure according to the request.

In this embodiment, the apparatus 500 may further include a second information processing unit 504 configured to delete stored information related to the failure after successful report of the information related to the failure, thereby saving equipment spaces.

In this embodiment, the apparatus 500 further includes a determining unit (not shown) configured to determine whether the stored information related to the failure contains information related to inter radio access technology (inter-RAT) handover, and/or determine whether the information related to the failure to be currently stored contains information related to the inter-RAT handover; and when a determination result of the determining unit is yes, the first information processing unit 501 stores the information related to the failure, thereby saving spaces of the UE.

In the above embodiment, components 502-504 are optional.

It can be seen from the above embodiment that after reporting the stored information related to failure to the network side, the network side is made to perform parameter configuration according to the reported information, thereby reducing occurrence of failure.

### Embodiment 7

Fig. 6 is a schematic diagram of a structure of the apparatus for information processing of Embodiment 7 of the present disclosure. As shown in Fig. 6, the apparatus 600 includes: an information receiving unit 601 configured to receive indication information indicating that UE has stored information related to a failure reported by the UE; or configured to receive information related to a failure of more than one times of failures reported by the user equipment at one time; or configured to receive information related to a failure of one time or a predetermined number times of failures reported by the UE, and first indication information or second indication information indicating that the user equipment further stores unreported information related to the failure.

In this embodiment, contents indicated by the indication information are as described in the above embodiments, and shall not be described herein any further.

In this embodiment, the above information may be received by the information receiving unit 601; and furthermore, different pieces of information may be respectively received by multiple receiving units.

In this embodiment, after the information receiving unit 601 receives the first indication information or the second indication information, the network side further transmits a request to the UE for reporting unreported information related to the failure.

As shown in Fig. 6, the apparatus 600 further includes an information transmitting unit 602 configured to, after receiving the first indication information or the second indication information, transmit to the user equipment a request indicating the user equipment to report the unreported information related to the failure. In this way, the information receiving unit 601 may receive the information reported by the UE according to the request.

In this embodiment, in receiving the predefined number of pieces of information related to the failure reported by the UE, the apparatus 600 may further include a configuring unit (not shown) configured to configure the UE with the predefined number and notify the UE

It can be seen from the above embodiment that the network side may receive the relevance information related to failure of each time reported by the UE, and performs parameter configuration according to the relevance information, thereby reducing occurrence of failure.

Embodiment 8 of the present disclosure further provides UE, including the apparatus as described in Embodiment 6.

Embodiment 9 of the present disclosure further provides a base station, including the apparatus as described in Embodiment 7.

Embodiment 10 of the present disclosure further provides a communication system, including a base station; wherein the communication system further includes UE configured to store information related to a failure and reserve the stored information related to the failure when the UE defects that the failure occurs. For example, a structure of the UE is as described in Embodiment 8, and shall not be described herein any further. Furthermore, a structure of the base station is as described in Embodiment 9, and shall not be described herein any further.

For example, in the communication system shown in Fig. 1, the base station (eNB) may be a base station of networks of different radio access technologies, a process of interaction between the base station and UE being as described in embodiments 3-5 and Figs. 2-4, which shall not be described herein any further.

An embodiment of the present disclosure provides UE, including:
a memory configured to store information related to a failure; and
a processor configured to, when the UE detects that a failure occurs, store information related to the failure and reserve the stored information related to the failure.

Furthermore, the processor is configured to transmit indication information to a network side, and/or transmit information related to the failure to a network; wherein contents indicated by the indication information are as described in the above embodiments, and shall not be described herein any further.

Furthermore, the processor is configured to report stored information related to the failure to the network side. In this embodiment, a manner of reporting is as described above, and shall not be described herein any further.

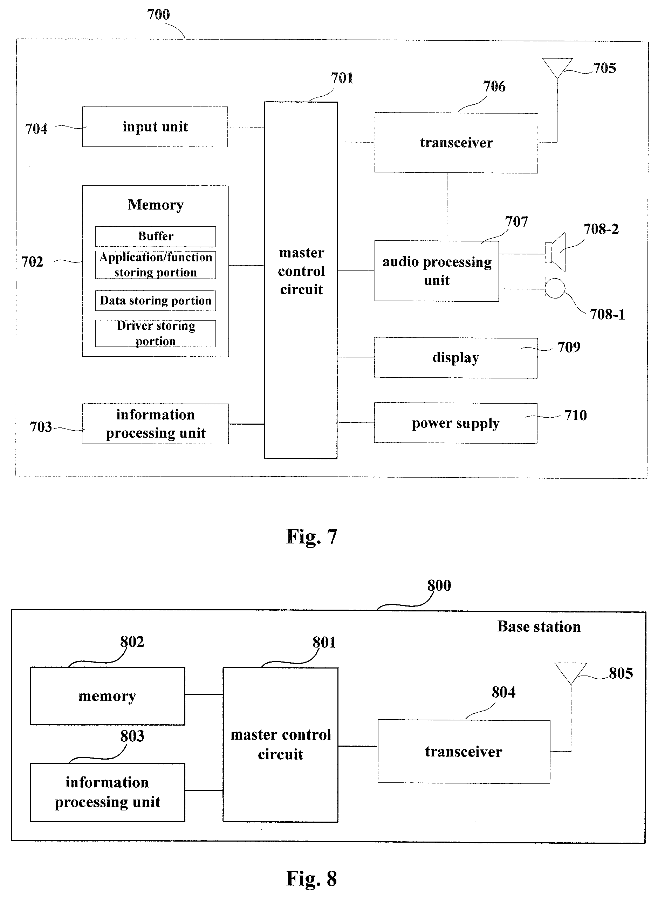

Fig. 7 is a schematic diagram of a structure of the UE of the present disclosure. As shown in Fig. 7, the UE includes an information processing unit 703, with its structure and functions being as described in Embodiment 6, and shall not be described herein any further.

For example, the UE is a mobile phone, and this figure is illustrative only. The mobile phone 700 may further include other types of circuit parts to supplement or replace the operating circuit, so as to carry out communication function or other functions. It is obvious that the mobile phone 700 does not necessarily include all the components shown in Fig. 7.

As shown in Fig. 7, the mobile phone 700 includes a master control circuit 701, a transceiver 706, an input unit 704, an audio processing unit 707, a memory 702, a display 709 and a power supply 710. The master control circuit 701 is sometimes referred to as a controller or manipulating control, and may include a microprocessor or other processor devices and/or logic devices. The master control circuit 701 receives input and controls operations of every components of the mobile phone 700.

In this embodiment,, the memory 702 may be, for example, one or more of a buffer memory, a flash memory, a hard drive, a mobile medium, a volatile memory, a nonvolatile memory, other suitable devices, which may store the above information related to the failure, and may further store a program executing storage of the above information related to the failure, reporting indication information and/or reporting the above information related to the failure. And the master control circuit 701 may execute the program stored in the memory 702, so as to realize information storage or reporting.

Functions of other parts are similar to those of the relevant art, which shall not be described herein any further.

The parts of the mobile phone 700 may be realized by specific hardware, firmware, software, or any combination thereof, without departing from the scope of the present disclosure.

An embodiment of the present disclosure provides a base station, including:
a processor configured to receive indication information indicating that UE has stored information related to a failure reported by the UE; or receive information related to the failure of more than one times of failures reported by the UE at one time; or receive information related to the failure of one time or a predetermined number times of failures reported by the UE, and first indication information or second indication information indicating that the UE further stores unreported information related to the failure.

Furthermore, the processor is configured to, after receiving the first indication information or the second indication information, transmit to the UE a request indicating the UE to report the unreported information related to the failure.

Fig. 8 is a schematic diagram of a structure of the base station of the embodiment of the present disclosure. As shown in Fig. 8, the eNB 800 includes an information processing unit 803, with its structure and functions being as described in Embodiment 7.

Furthermore, it includes a master control circuit 801, a memory 802, a transceiver 804 and an antenna 805. For example, the memory 802 may store information related to a failure received from the UE, and may further store a program for information processing, and execute the program under control of the master control circuit 801, so as to receive various information transmitted by the UE, and transmit request information to the UE. Functions of other parts are similar to those of the relevant art, and shall not be described herein any further.

An embodiment of the present disclosure provides a computer-readable program, wherein when the program is executed in an apparatus for information processing or UE, the program enables a computer to carry out the method for information processing as described in embodiments 1 and 3-5 in the apparatus for information processing or the UE.

An embodiment of the present disclosure provides a storage medium in which a computer-readable program is stored, wherein the computer-readable program enables a computer to carry out the method for information processing as described in embodiments 1 and 3-5 in an apparatus for information processing or UE.

An embodiment of the present disclosure provides a computer-readable program, wherein when the program is executed in an apparatus for information processing or a base station, the program enables a computer to carry out the method for information processing as described in embodiments 2 and 3-5 in the apparatus for information processing or the base station.

An embodiment of the present disclosure provides a storage medium in which a computer-readable program is stored, wherein the computer-readable program enables a computer to carry out the method for information processing as described in embodiments 2 and 3-5 in an apparatus for information processing or a base station.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A method for information processing, comprising:
storing, when user equipment detects that a failure occurs, information related to the failure, and reserving the stored information related to the failure.

2. The method according to claim 1, wherein the information related to the failure comprises one or more pieces of the following information:
measurement results of a serving cell and a neighboring cell when the failure occurs, an identifier used by the user equipment, and a cause of occurrence of the failure.

3. The method according to claim 1 or 2, wherein the failure is related to inter radio access technology (inter-RAT) handover.

4. The method according to claim 3, wherein the information related to the failure comprises relevance information on the inter-RAT handover, the relevance information comprising information on a cell where the user equipment is present before the occurrence of the failure, and/or information on a cell where the user equipment is present in being reconnected to a network.

5. The method according to claim 3, wherein the method further comprises:
storing the information related to the failure only when it is determined that the stored information related to the failure contains information related to the inter-RAT handover, and/or when it is determined that the information related to the failure to be currently stored contains information related to the inter-RAT handover.

6. The method according to claim 1 or 3, wherein when the user equipment is reconnected to a network, the method further comprises:
transmitting to a network side indication information indicating that the user equipment has stored the information related to the failure, wherein the user equipment storing the information related to the failure of more than one times of failures is indicated, or the number of pieces of the information related to the failure stored by the user equipment and that the number is greater than 1 are indicated, or the user equipment storing relevance information on the inter-RAT handover is indicated.

7. The method according to claim 1, wherein the method further comprises:
reporting the information related to the failure to the network side; and wherein, the user equipment reports all the information related to the failure at one time; or the user equipment reports the information related to the failure piece by piece;
wherein at each time of reporting the information on the failure, when there still exists unreported information related to the failure, first indication information indicating that the user equipment further stores the unreported information related to the failure is reported to the network side; or
the user equipment reports the information related to the failure according to a predetermined number; wherein, when reporting the predetermined number of pieces of the information related to the failure, when there still exists unreported information related to the failure, second indication information indicating that the user equipment further stores the unreported information related to the failure is reported to the network side.

8. The method according to claim 7, wherein after the first indication information or the second indication information is transmitted to the network side, the method further comprises: transmitting the unreported information related to the failure according to a request of the network side.

9. The method according to claim 7, wherein the method further comprises:
deleting the reported information related to the failure.

10. A method for information processing, comprising:
receiving indication information indicating that user equipment has stored information related to a failure reported by the user equipment; wherein the indication information is used to indicate that the user equipment stores information related to the failure of more than one times of failures, or indicate the number of pieces of the information related to the failure stored by the user equipment and that the number is greater than 1, or indicate that the user equipment stores relevance information on inter-RAT handover; or
receiving information related to a failure of more than one times of failures reported by user equipment at one time; or
receiving information related to a failure of one time or a predetermined number times of failures reported by user equipment, and first indication information or second indication information indicating that the user equipment further stores unreported information related to the failure.

11. The method according to claim 10, wherein after the first indication information or the second indication information is received, the method further comprises:
transmitting to the user equipment a request indicating the user equipment to report the unreported information related to the failure.

12. An apparatus for information processing, comprising:
a first information processing unit configured to, when user equipment detects that a failure occurs, store information related to the failure and reserve the stored information related to the failure.

13. The apparatus according to claim 12, wherein the apparatus further comprises:
a determining unit configured to determine whether the stored information related to the failure contains information related to inter radio access technology (inter-RAT) handover, and/or determine whether the information related to the failure to be currently stored contains information related to the inter-RAT handover;
and when a determination result of the determining unit is yes, the first information processing unit stores the information related to the failure.

14. The apparatus according to claim 12, wherein the apparatus further comprises:
a first transmitting unit configured to transmit indication information to a network side when the user equipment is reconnected to a network, the indication information being used to indicate that the user equipment stores information related to the failure of more than one times of failures, or indicate the number of pieces of the information related to the failure stored by the user equipment and that the number is greater than 1, or indicate that the user equipment stores relevance information on inter-RAT handover.

15. The apparatus according to claim 12, wherein the apparatus further comprises a reporting unit configured to report the information related to the failure to the network side;
and wherein the reporting unit reports all the information related to the failure at one time; or
reports the information related to the failure piece by piece; wherein at each time of reporting the information related to the failure, when there still exists unreported information related to the failure, first indication information indicating that the user equipment further stores the unreported information related to the failure is reported to the network side; or
reports the information related to the failure according to a predetermined number; wherein, when reporting the predetermined number of pieces of the information related to the failure, when there still exists unreported information related to the failure, second indication information indicating that the user equipment further stores the unreported information related to the failure is reported to the network side.

16. The apparatus according to claim 15, wherein after transmitting the first indication information or the second indication information to the network side, the reporting unit transmits the unreported information related to the failure according to a request of the network side.

17. The apparatus according to claim 15, wherein the apparatus further comprises:
a second information processing unit configured to delete the reported information related to the failure.

18. An apparatus for information processing, comprising:
an information receiving unit configured to receive indication information indicating that user equipment has stored information related to a failure reported by the user equipment; wherein the indication information is used to indicate that the user equipment stores information related to the failure of more than one times of failures, or indicate the number of pieces of the information related to the failure stored by the user equipment and that the number is greater than 1, or indicate that the user equipment stores relevance information on inter-RAT handover; or
to receive information related to a failure of more than one times of failures reported by user equipment at one time; or
to receive information related to a failure of one time or a predetermined number times of failures reported by user equipment, and first indication information or second indication information indicating that the user equipment further stores unreported information related to the failure.

19. The apparatus according to claim 18, wherein the apparatus further comprises:
an information transmitting unit configured to, after receiving the first indication information or the second indication information, transmit to the user equipment a request indicating the user equipment to report the unreported information related to the failure.

20. User equipment, comprising the apparatus as claimed in any one of claims 12-17.

21. Abase station, comprising the apparatus as claimed in claim 18 or 19.

22. A network system, comprising a base station; wherein the network system further comprises user equipment configured to store information related to a failure and reserve the stored information related to the failure when the user equipment detects that the failure occurs.

23. A computer-readable program, wherein when the program is executed in an apparatus for information processing or user equipment, the program enables a computer to carry out the method for information processing as claimed in any one of claims 1-9 in the apparatus for information processing or the user equipment.

24. A storage medium in which a computer-readable program is stored, wherein the computer-readable program enables a computer to carry out the method for information processing as claimed in any one of claims 1-9 in an apparatus for information processing or user equipment.

25. A computer-readable program, wherein when the program is executed in an apparatus for information processing or a base station, the program enables a computer to carry out the method for information processing as claimed in claim 10 or 11 in the apparatus for information processing or the base station.

26. A storage medium in which a computer-readable program is stored, wherein the computer-readable program enables a computer to carry out the method for information processing as claimed in claim 10 or 11 in an apparatus for information processing or a base station.
